Europäisches Patentamt

**European Patent Office**

Office européen des brevets

(11) Veröffentlichungsnummer: **0 082 362**
**B1**

(12) **EUROPÄISCHE PATENTSCHRIFT**

(45) Veröffentlichungstag der Patentschrift:
13.11.85

(51) Int. Cl.⁴: **H 02 P 7/00**

(21) Anmeldenummer: 82111087.1

(22) Anmeldetag: 01.12.82

(54) **Digitale Stromregelschaltung.**

(30) Priorität: 02.12.81 DE 3147731

(43) Veröffentlichungstag der Anmeldung:
29.06.83 Patentblatt 83/26

(45) Bekanntmachung des Hinweises auf die Patenterteilung:
13.11.85 Patentblatt 85/46

(84) Benannte Vertragsstaaten:
AT BE CH DE FR GB IT LI LU NL SE

(56) Entgegenhaltungen:
DE - A - 1 513 181
DE - B - 1 222 155

(73) Patentinhaber: ASR Servotron AG, Avenue des Grandes-Communes 8, CH-1213 Le Petit-Lancy/Genf (CH)

(72) Erfinder: Petsch, Johann, Anzinger Strasse 30, D-8011 Poing (DE)

(74) Vertreter: Heusler, Wolfgang, Dipl.-Ing. et al, Von Bezold, Dieter, Dr. Schütz, Peter, Dipl.-Ing. Heusler, Wolfgang, Dipl.-Ing. Maria-Theresia-Strasse 22 Postfach 860 260, D-8000 München 86 (DE)

## Beschreibung

Die Erfindung bezieht sich auf eine digitale Stromregelschaltung für einen in einer Brückenschaltung mit Leistungsschaltern angeordneten Gleichstromverbraucher, beispielsweise einen Servomotor, wie sie in der europäischen Patentanmeldung Nr. 8 210 215.4 (EP-A1-72 022) vorgeschlagen wurde.

Eine digitale Stromregelschaltung dieser Art hat gegenüber herkömmlichen, mit Pulsbreiten-Modulation arbeitenden analogen Systemen viele Vorteile. Hierzu zählen u. a. eine hohe Bandbreite des Regelkreises (mehr als 40 kHz) insbesondere bei paralleler Übertragung der den Istwertcode bildenden Bits mit daraus resultierender niedriger Stromwelligkeit (Formfaktor) und optimaler Nutzung der Leistungsfähigkeit der Leistungsschalter. Das gesamte System kann von einem zentralen Taktgeber mit einer hohen Taktfrequenz bis zu 100 kHz oder mehr gesteuert werden. Die digitale Stromregelung ermöglicht ferner eine vollkommene, beispielsweise bei der Motorsteuerung von Präzisionsmaschinen wichtige Symmetrie um den Stromnullwert, wenn (im Zweierkomplement) einander entsprechende Codezahlen für positive und negative Werte verwendet werden, sowie wegen der digitalen Informationsübertragung eine weitgehend lineare Regelkennlinie. Vor allem aber erlaubt das digitale Regelprinzip mit der »zeitdiskreten« Ansteuerung der Leistungsschalter (gewöhnlich Transistoren), d. h. durch den Taktgeber vorgegebenen Schaltzeiten optimale Schaltbedingungen, insbesondere die Vermeidung von Verzögerungszeiten und eine beträchtliche Verminderung des Aufwandes für die üblichen Entlastungsnetzwerke der Leistungsschalter; bei 4-Quadranten-Betrieb kann auf Entlastungsnetzwerke für zwei der vier Quadranten verzichtet werden.

Wenn schließlich die die Leistungsschalter sowie einen den binären Istwert-Code erzeugenden A/D-Wandler enthaltende Leistungsstufe von der u. a. das Vergleichsschaltwerk enthaltenden Steuerstufe galvanisch vollständig entkoppelt ist, etwa mit Optokopplern für den Istwert-Code, kann man die Leistungsschalter über eine Gleichrichteranordnung unmittelbar aus dem vorhandenen Wechsel- oder Drehstromnetz versorgen.

Aus der DE-OS 2 930 907 ist ein Verfahren zur Steuerung beispielsweise eines Motors durch Pulsbreiten-Modulation mit einer Transistorbrücke im 4-Quadranten-Betrieb bekannt, bei dem bei jeder Richtung des Laststroms einer der Transistoren mit einem Dauersignal angesteuert wird. Dadurch soll die Welligkeit des Laststroms herabgesetzt werden. Bei einem ähnlichen, aus der DE-OS 2 930 920 bekannten Verfahren werden die diagonal in der Brücke gegenüberliegenden Transistoren zeitlich versetzt so getaktet, daß bei jeder Richtung des Laststroms nur zwei diagonal gegenüberliegende Transistoren angesteuert werden und folglich eine sonst notwendige Sicherheitspause zwischen den Einschaltimpulsen lediglich bei Polaritätswechsel des Laststroms eingehalten werden muß.

Auch hierdurch soll die Welligkeit des Laststroms und außerdem die Linearität der Steuerkennlinie verbessert werden. Die bekannten Verfahren verwenden jedoch die konventionelle Analogtechnik. Wenn im übrigen bei Wechsel der Polarität des Stromsollwertes die Stromrichtung der Brücke in Abhängigkeit von der Ausgangsspannung einer analogen Vergleichsstufe sofort umgeschaltet wird, bevor der Strom tatsächlich zu Null geworden ist, können sich Störungen und unerwünschte Stromverzerrungen ergeben, die sich insbesondere bei Langsamlauf eines Motors als prozentual erhebliche Geschwindigkeitsfehler bemerkbar machen.

Der Erfindung liegt die Aufgabe zugrunde, eine die Vorteile der Digitaltechnik und der zeitdiskreten Ansteuerung der Endstufe ausnutzende Stromregelschaltung anzugeben, die bei Polaritätsänderung des Stromsollwertes einen weitgehend störungs- und verzerrungsfreien Wechsel des Laststroms über einen Nullwert ermöglicht.

Diese Aufgabe wird durch die im Anspruch 1 gekennzeichnete Stromregelschaltung gelöst.

Die hier beschriebene Stromregelschaltung eignet sich im Prinzip für beliebige Brückenschaltungen und auch für 2- oder 6-Quadranten-Betrieb. Nur beispielsweise wird sie im folgenden in Verbindung mit einer im 4-Quadranten-Betrieb arbeitenden Brückenschaltung für einen Gleichstrommotor erläutert.

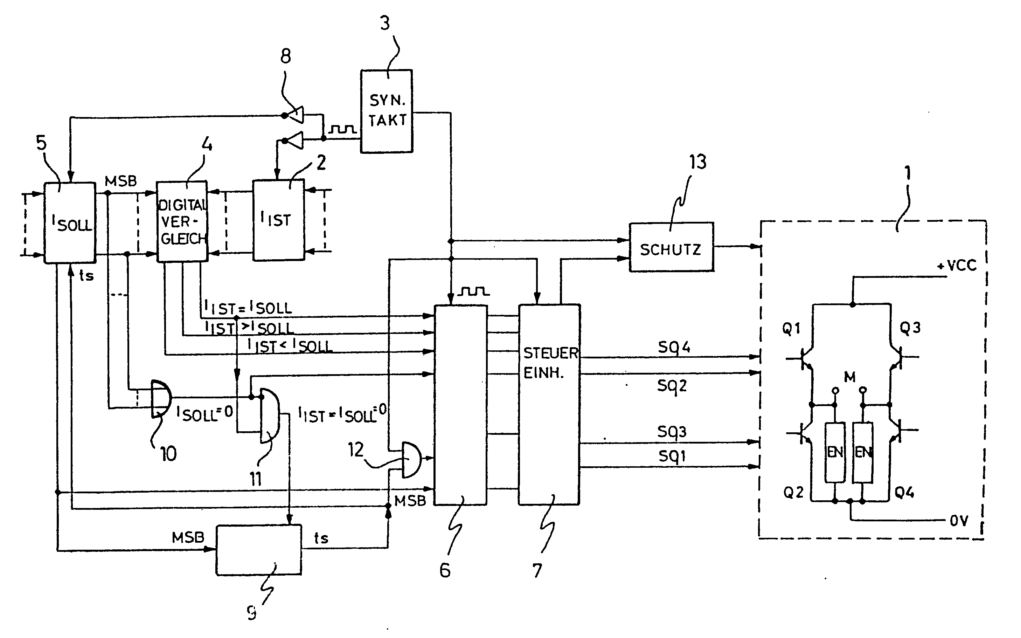

Die in der Zeichnung dargestellte Stromregelschaltung entspricht vorzugsweise dem in der erwähnten Patentanmeldung Nr. 82 107 215.4 beschriebenen Prinzip. Demnach ist eine von ihren Steuerschaltungen und deren Stromversorgung galvanisch vollkommen isolierte Endstufe 1 mit den zu einer Brücke geschalteten Leistungstransistoren $Q_1$, $Q_2$, $Q_3$ und $Q_4$ vorgesehen, deren Betriebsspannung +VCC (über eine Gleichrichteranordnung) unmittelbar vom jeweils vorhandenen Wechselstromnetz kommen kann. In der Endstufe wird von einer (nicht dargestellten) Anordnung mit einer Sample-Hold-Schaltung und einem A/D-Wandler der durch den Gleichstromverbraucher geleitete Strom durch Messung des Spannungsabfalls an einem Widerstand in einem der Quadranten oder auch direkt in Reihe mit dem Verbraucher (Motorkreis) erfaßt und der entsprechende binäre Istwert-Code von z. B. 8 Bits erzeugt. Der Verbraucher bzw. Gleichstrommotor wird in bekannter Weise zwischen die Klemmen M geschaltet. Der Istwert-Code wird vorzugsweise parallel über (ebenfalls nicht dargestellte) Opto-Koppler oder eventuell auch seriell z. B. über Faserlichtleiter aus der Endstufe 1 einer binären Puffer- oder Signalspeicherschaltung 2 zugeführt, aus der die Bits parallel unter Signalflankensteuerung einer das gesamte System synchronisierenden und die Regelbandbreite bestimmenden, einen Taktgeber enthaltenden Ablaufsteuereinheit 3 an die Istwert-Eingänge eines binären Vergleichsschaltwerks 4 angelegt werden. Ebenfalls über eine von der Einheit 3 flankengesteuerte, aus noch zu erläuternden Gründen außerdem auf Null stellbare Signalspeicherschaltung 5 wird ein aus 8 parallelen Bits bestehender Sollwertcode an das Vergleichsschaltwerk 4 angelegt. Die Einheit 3 startet auch den erwähnten A/D-Wandler und erhält von ihm eine Rückmeldung über die vollendete Umwandlung (wozu zusätzliche Optokoppler vorhanden sein können), und erst dann werden die Schaltungen 2 und 5 für neue Informationen befähigt, die sie jeweils Gleichzeitig an das Schaltwerk 4 abgeben. Die Schaltung 2 empfängt den Istwert-Code im Zweierkomplement, und der mit ihr synchronisierten Schaltung 5 kann der Sollwertcode ebenfalls im Zweierkomplement beispielsweise von einem Rechner zugeführt werden, zweckmäßig über ein Filter, das Änderungen auf etwa die halbe Bandbreite begrenzt. Im Falle eines Motorstromreglers kann der Sollwertcode in an sich bekannter Weise von einem Drehzahlregler vorgegeben werden.

Das Vergleichsschaltwerk 4 kann an sich bekannter Art für 8-Bit-Wörter im Binärcode sein (z. B. zwei in Kaskade geschaltete IC-Kreise vom Typ MM 54 C 85/MM 74 C 85 der Fa. National Semiconductor) und liefert als Vergleichsergebnis an ihren drei Ausgängen jeweils binäre Signale, wenn der Istwert $I_{IST}$ des Stromes kleiner bzw. größer ist als der Sollwert $I_{SOLL}$ bzw. mit diesem übereinstimmt. Diese Informationen gelangen über eine Signalspeicheranordnung 6 unter Steuerung durch die Ablaufsteuereinheit 3 in eine Quadranten-Steuereinheit 7, die in Abhängigkeit von den empfangenen Informationen mit ihren eigenen binären Ausgangssignalen sq1 bis sq4 die 4 Quadranten der Endstufe 1, d. h. die Leistungstransistoren $Q_1$ bis $Q_4$ ansteuert. Die Ausgangssignale sq1 bis sq4 können ebenfalls über Opto-Koppler, vorzugsweise jedoch über Leistungsübertrager unter Verstärkung in die galvanisch isolierte Endstufe 1 übertragen werden. Darstellungsgemäß müssen nur die Leistungstransistoren $Q_2$ und $Q_4$ mit Entlastungsnetzwerken EN üblicher Art versehen sein. Die Systemtaktfrequenz der Einheit 3, mit der die Stromistwerterfassung und/oder der binäre Vergleich gesteuert werden, kann für eine gute Bandbreite z. B. bis 10mal größer sein als die (mit ihr synchronisierte) maximale Schaltfrequenz der Endstufe 1.

Die Signalspeicherschaltungen 2 und 5 des Vergleichsschaltwerks 4 und die Signalspeicheranordnung 6 der Steuereinheit 7 werden wie auch die übrigen von der Einheit 3 getakteten Schaltungen von den gleichen, beispielsweise positiven Flanken des aus einer Rechteckschwingung bestehenden Signals gesteuert, so daß eine genaue Zeitsynchronisierung des gesamten Systems gewährleistet ist. Selbstverständlich können diese Flanken durch vorhandene Torglieder oder dergleichen oder, soweit dies zweckmäßig ist, auch künstlich verzögert werden. Bei dem dargestellten Beispiel werden jedoch die Taktimpulse den Signalspeicherschaltungen 2 und 5 jeweils über ein Invertierglied 8 zugeführt. Infolgedessen erfolgt der Vergleich der Ist- und Sollwertcodes mit einer Phasenverschiebung von 180° bezüglich der Abgabe der Vergleichsergebnisse an die Steuereinheit 7 und die Treiberschaltungen. Während der halben Taktperiode ist gewährleistet, daß die Soll- und Istwertinformationen überlappend, d. h. ausreichend lang gleichzeitig zur Verfügung stehen und zuverlässig verglichen werden können.

Bei dem erfindungsgemäß angewendeten Prinzip der unipolaren zeitdiskreten Ansteuerung der Leistungstransistoren, die von dem konventionellen Prinzip der Pulsbreiten-Modulation zu unterscheiden ist, können die Leistungstransistoren $Q_1$ bis $Q_4$ nur zu bestimmten, durch das Taktsignal definierten Zeiten ein- und ausgeschaltet werden. Beispielsweise haben sie bei gewünschter positiver Stromrichtung an den Klemmen M folgenden Leitzustand:

$Q_2$ und $Q_3$ ständig gesperrt;
$Q_1$ ständig leitend;
$Q_4$ leitend bei $I_{IST} < I_{SOLL}$;
$Q_4$ gesperrt bei $I_{IST} > I_{SOLL}$.

Wird dagegen negative Stromrichtung eingestellt, so ergibt sich der Zustand

$Q_1$ und $Q_4$ gesperrt;
$Q_3$ ständig leitend;
$Q_2$ leitend bei $I_{IST} < I_{SOLL}$;
$Q_2$ gesperrt bei $I_{IST} > I_{SOLL}$.

Bei gegebener Stromrichtung wird also die Stromstärke nur mit einem der vier Leistungstransistoren geregelt, im Falle positiver Stromrichtung mit dem Transistor $Q_4$. Dieser kann z. B. beim Beschleunigen des Motors mit Spitzenstrom und auch im Sollgeschwindigkeitsbetrieb, bei dem der Stromwert gewöhnlich niedriger ist, in Abhängigkeit von der Verbrauchs- bzw. Motorinduktivität jeweils eine oder wenige Taktperioden lang leitend bleiben. Bei jedem Taktimpuls wird von dem Vergleichsschaltwerk 4 festgestellt, ob der Sollwert erreicht oder bereits überschritten ist, und ggf. der Transistor $Q_4$ eine oder mehrere Taktperioden lang gesperrt, bis der Stromsollwert wieder erreicht oder unterschritten ist, usw. Zu jedem Transistor ist antiparallel eine Freilaufdiode geschaltet. In den Freilaufphasen bei nur einem leitenden Transistor fließt der Strom jeweils durch eine dieser (nicht dargestellten) Dioden. Im Gegensatz zu dem Regenerationsbetrieb konventioneller Systeme erfolgt im Normalfall keine Rückspeisung zum Netz. Nur wenn im Störfall bei Sperrung aller vier Quadranten kinetische Energie des Motors beseitigt werden muß, erfolgt eine Rückspeisung über die Freilaufdioden und eine passive Schutzschaltung, die aber einfacher und für geringere Leistung ausgelegt sein kann als bei Servoantrieben bisher üblicher Regenerationsschaltungen.

Die Polarität des Stromsollwerts kann auf einen an sich beliebigen Wert des Verbraucherstroms bezogen sein, bei dem es sich jedoch normalerweise um den echten Nullwert, d. h. um den Fall handelt, daß im Verbraucher kein Strom fließen soll. Wenn nun der Stromsollwert seine Polarität ändert, also z. B. der Sollwertcode am Eingang des Vergleichsschaltwerks 4 negativen statt wie bisher positiven Verbraucherstrom fordert, wird nicht (wie es dem bisher üblichen Verfahren entsprechen würde) beim nächsten Taktimpuls automatisch die Brücke in der Endstufe 1 umgeschaltet, was zu Unlinearitäten führen könnte, wenn der Strom zu diesem Zeitpunkt noch einen positiven Wert hat. Erfindungsgemäß soll die Umschaltung so lange blockiert werden, bis der Verbraucherstrom den Bezugswert erreicht hat, bei dem betrachteten Beispiel also zu Null geworden ist. Erst dann beginnt wieder der normale Regelbetrieb ggf. in der anderen Stromrichtung.

Zu diesem Zweck muß zunächst der Polaritätswechsel des Sollwertcodes ermittelt werden. Vorzugsweise gibt der Sollwertcode wie auch der Istwertcode die jeweiligen Stromwerte in an sich bekannter Weise im Zweierkomplement wieder, d. h. es handelt sich um einen bezüglich einer echten Null-Lage symmetrischen Code, dessen Vorzeichen durch den Wert seines höchststelligen Bits (MSB) bestimmbar ist. Da ein direkter Vergleich von Daten im Zweierkomplement im Schaltwerk 4 zu Fehlentscheidungen führen kann, werden die Ist- und Sollwertcodes zunächst in die binäre Absolutform (natürlicher Binärcode mit Vorzeichen) umgesetzt, und zwar unter Steuerung des jeweiligen Bits MSB derart, daß die restlichen Bits invertiert werden, wenn das Bit MSB den Binärwert »1« hat. Stattdessen könnte auch ein anderer Code mit oder ohne eigenes Vorzeichenbit verwendet werden. Bei dem hier beschriebenen Beispiel wird das höchststellige Bit MSB des Sollwertcodes einer Nullstell- oder Sperrschaltung 9 zugeführt, die in einer möglichen Ausführungsform mit Hilfe von Schmitt-Triggern, flankengesteuerten Kippstufen oder anderen für derartige Zwecke üblichen Schaltkreisen jedesmal ein Signal ts erzeugt, wenn ihr binäres Eingangssignal seinen Wert in der einen oder anderen Richtung wechselt.

Das Signal ts dient dazu, in der Signalspeicherschaltung 5 allen Bits des Sollwertcodes künstlich den dem Sollwert Null entsprechenden Binärwert aufzuzwingen, bei dem erwähnten Beispiel den Binärwert 0. Dieser Zustand wird von einem Decodierglied 10 festgestellt, beispielsweise von dem dargestellten ODER-Glied, dessen entsprechendes Ausgangssignal »0« dafür sorgt, daß mit Hilfe der Steuereinheit 7 alle Leistungstransistoren $Q_1$ bis $Q_2$ gesperrt und somit die Brückenschaltung blockiert wird, bis auch der Istwertcode zu Null wird.

Das Ausgangssignal des Decodiergliedes 10 gelangt zugleich an den einen Eingang eines Torgliedes 11, dessen anderer Eingang an den Ausgang des Vergleichsschaltwerks 4 für $I_{IST} = I_{SOLL}$ geschaltet ist. Sobald die Bedingung $I_{IST} = I_{SOLL} = 0$ erfüllt ist, erzeugt das Torglied 11 das Freigabesignal so, wodurch das Signal ts der Sperrschaltung 9 unterbrochen, der am Eingang der steuerbaren Signalspeicherschaltung 5 liegende neue Sollwert an das Vergleichsschaltwerk 4 weitergegeben und somit die Brückenschaltung zur Umschaltung für die neue Stromrichtung freigegeben wird.

Während der künstlichen Nullstellung des Sollwertcodes wird das beim Polaritätswechsel geänderte Bit MSB in der Sperrschaltung 9 nicht zwangsläufig auf »0« gestellt, sondern es wird zwischengespeichert, bis das Freigabesignal so erscheint. Beispielsweise kann das Bit MSB ein erstes Flipflop setzen, das seinerseits ein den aktuellen MSB-Wert speicherndes zweites Flipflop verriegelt; die Flipflops werden rückgesetzt bzw. entriegelt, sobald $I_{IST} = 0$ ist.

Das Einschalten der Regelschaltung kann man künstlich davon abhängig machen, ob die Bedingung $I_{IST} = I_{SOLL} = 0$ entsprechend dem Signal so erfüllt ist. Die Einschaltung wird (bei $I_{SOLL} = 0$) nicht freigegeben, wenn der Istwertcode nicht dem Strom Null entspricht, was beispielsweise einen Schutz des Reglers gegen einen Ausfall der Istwerterfassung des Stroms in der Endstufe 1 bedeutet.

In Sonderfällen kann das Signal ts auch über ein vom Taktsignal gesteuertes Torglied 12 und die Signalspeicheranordnung 6 der Steuereinheit 7 zugeführt werden und dort durch Sperrung aller Leistungstransistoren die Brückenschaltung vorübergehend blockieren. Ferner besteht die Möglichkeit, ohne Nullstellung des Sollwertcodes unmittelbar in der Steuereinheit 7 in Abhängigkeit von dem bei Polaritätswechsel des Sollwertcodes erzeugten Signal ts sowie von dem Kriterium $I_{IST} = 0$ die Endstufe 1 solange zu blockieren, wie der Laststrom noch nicht zu Null geworden ist. Das Kriterium $I_{IST} = 0$ kann selbstverständlich auch durch Decodieren des Istwertcodes ermittelt werden.

Zur Vermeidung unerwünschter Verzögerungen ist es zweckmäßig, die Erzeugung des künstlichen Nullwertes zu beenden bzw. das Tastsignal ts zu unterbrechen, wenn der Stromsollwert erneut das Vorzeichen wechselt, bevor der Iststrom den Nullwert erreicht hat. Diese Funktion läßt sich beispielsweise durch einfache binäre Schaltwerke in der Sperrschaltung 9 realisieren. In vielen Fällen wird allerdings die Bandbreite der möglichen Änderungen des Sollwertcodes auf einen Wert begrenzt, bei dem ein erneuter Vorzeichenwechsel erst nach mindestens einigen Taktperioden, also nicht vor dem Abfallen des Verbraucherstroms auf Null möglich ist.

Die hier beschriebene digitale Regelschaltung erlaubt auf einfache Weise die Realisierung zuverlässiger Schutzmaßnahmen. Beispielsweise kann in der Steuerschaltung 7 ein die Endstufe 1 über eine Schutzschaltung 13 sperrendes Alarmsignal erzeugt werden, wenn das Vergleichsschaltwerk 4 gleichzeitig die Informationen liefert, daß der Istwert größer und kleiner ist als der Sollwert.

## Patentansprüche

1. Digitale Stromregelschaltung für einen in einer Brückenschaltung mit elektronischen Leistungsschaltern (Q$_1$—Q$_4$) angeordneten, im Mehr-Quadranten-Betrieb arbeitenden Gleichstromverbraucher (M) dessen Stromrichtung umkehrbar ist, mit einem digitalen Vergleichsschaltwerk (4), das einen dem Verbraucherstrom entsprechenden binären Istwertcode mit einem binären Sollwertcode vergleicht und bei Über- bzw. Unterschreiten des Stromsollwertes sowie bei Übereinstimmung von Ist- und Sollwert jeweils entsprechende Binärsignale für eine Steuereinheit (7) der Leistungsschalter (Q$_1$—Q$_4$) erzeugen kann,
mit einer Schaltung (9) zur Ermittlung des der gewünschten Stromrichtung entsprechenden Vorzeichens des Sollwertcodes, und mit einem Taktgeber (3), der sowohl das Vergleichsschaltwerk (4) als auch die Steuereinheit (7) und damit die Ein- und Ausschaltzeiten der Leistungsschalter (Q$_1$—Q$_4$) steuert.
wobei die Steuereinheit (7) bei jeder Verbraucherstromrichtung den einen Leistungsschalter der der betreffenden Stromrichtung entsprechenden Brückenzweige kontinuierlich leitend hält und einen zugehörigen zweiten Leistungsschalter jeweils zu durch ein Taktsignal definierten Zeiten (zeitdiskret) bis zum Erreichen des Stromsollwerts ein- bzw. ausschaltet, während die Leistungsschalter der anderen Brückenzweige bis zu einem Polaritätswechsel des Sollwertcodes gesperrt bleiben,
dadurch gekennzeichnet, daß eine Sperrschaltung (9) vorgesehen ist, die bei Polaritätswechsel des Sollwertcodes ein Tastsignal (ts) erzeugt, mit dem der Sollwertcode für das Vergleichsschaltwerk (4) künstlich auf den Soll-Nullwert gebracht wird oder in der Steuereinheit (7) Sperrsignale für die Leistungsschalter (Q$_1$—Q$_4$) erzeugt werden,
und daß eine Freigabeschaltung (11) vorgesehen ist, die in Abhängigkeit vom Istwert-Code gesteuert ist und ein Signal (so) zum erneuten Anlegen des zum betreffenden Zeitpunkt der Stromregelschaltung zugeführten Sollwertcodes an das Vergleichsschaltwerk (4) bzw. zum Freigeben der Leistungsschalter (Q$_1$—Q$_4$) erzeugt, wenn der Verbraucherstrom den dem Nullwert des Sollwertcodes entsprechenden Istwert erreicht.

2. Stromregelschaltung nach Anspruch 1, dadurch gekennzeichnet, daß eine Schaltung vorgesehen ist, welche die Erzeugung des künstlichen Nullwertes beendet und dem Vergleichsschaltwerk (4) wieder den echten Sollwertcode zuführt, wenn der Sollwertcode vor Erreichen des dem Nullwert entsprechenden Istwertcodes erneut die Polarität ändert.

3. Stromregelschaltung nach Anspruch 1 oder 2, dadurch gekennzeichnet, daß die den Polaritätswechsel feststellende Sperrschaltung (9) auf jeden Wechsel des Binärwertes eines bestimmten Bits (MSB) des Sollwertcodes anspricht.

4. Stromregelschaltung nach Anspruch 2 oder 3, dadurch gekennzeichnet, daß der Sollwertcode einem Decodierglied (10) zugeführt ist, das bei dem Soll-Nullwert ein Signal erzeugt, welches mit dem der Übereinstimmung von Ist- und Sollwert entsprechenden Ausgangssignal (I$_{IST}$ = I$_{SOLL}$) des Vergleichsschaltwerks (4) zu dem Freigabesignal (so) für die Sperrschaltung (9) verknüpft wird.

5. Stromregelschaltung nach einem der vorangehenden Ansprüche, dadurch gekennzeichnet, daß das die Brückenschaltung (Endstufe 1) blokkierende Tastsignal (ts) der Sperrschaltung (9) unterbrochen wird, wenn der Sollwertcode erneut das Vorzeichen wechselt, bevor der Iststrom den Nullwert erreicht hat.

6. Stromregelschaltung nach einem der vorangehenden Ansprüche, dadurch gekennzeichnet, daß der Taktgeber (3) die Steuereinheit (7) mit den positiven Flanken und die Übernahme der Soll- und Istwertcodes durch das Vergleichsschaltwerk (4) mit den invertierten negativen Flanken der Taktimpulse steuert oder umgekehrt.

## Claims

1. Digital current regulator circuit for a DC load (M) which is connected in a bridge circuit with electronic power switches (Q1—Q4) and which works in multiquadrant operation with reversible current direction, comprising a digital comparator (4) that compares a binary actual value code corresponding to the load current with a binary theoretical value code and is adapted to generate binary signals indicating if the actual value is above or below the desired theoretical value of the current or equal thereto, said binary signals being applied to a control unit (7) of the power switches (Q1—Q4), a circuit (9) for determining the sign of the theoretical value code, where this sign corresponds to the desired current direction, and a timer (3) that controls both the comparator (4) and the control unit (7) and thus the switch-on and switch-off times of the power switches (Q1—Q4), said
control unit (7) at each load current direction, continuously holding conducting one power switch in the branches of the bridge corresponding to the respective direction and switching on or off a related second power switch at times defined by a clock signal (in time-discrete fashion) depending on whether the theoretical current value is reached, while maintaining the power switches of the other bridge branches blocked until there is a polarity change in the theoretical value code,
characterized by a blocking circuit (9) that when the theoretical value code changes its polarity, generates a strobe signals (ts) which causes the theoretical value code applied to the comparator (4) to be artificially equal to the theoretical zero value or blocking signals for the power switches (Q1—Q4) to be produced in the control unit (7), and a release circuit (11) that is controlled in response to the actual value code and generates a signal (so) causing the theoretical value code applied at the respective time to the current regulator to be again applied to the comparator (4), or the power switches (Q1—Q4) to be released, respectively, when the load current becomes equal to the actual value corresponding to the zero value of the theoretical value code.

2. Current regulator circuit according to claim 1, characterized by a circuit that therminates the generation of the artificial zero value and again applies to the comparator (4) the real theoretical value code when the theoretical value code again changes the polarity before reaching the actual value code corresponding to the zero value.

3. Current regulator circuit according to claim 1 or 2, characterized in that the blocking circuit (9) ascertaining the polarity change is responsive to each change of the binary value of a given bit (MSB) of the theoretical value code.

4. Current regulator circuit according to claim 2 or 3, characterized in that the theoretical value code is applied to a decoding element (10) producing a signal when the theoretical zero value is reached, the signal from the decoding element being combined with the output signal ($I_{IST}$ = $I_{SOLL}$) of the comparator (4) indicating that the actual value corresponds to the theoretical value to form the release signal (so) for the blocking circuit (9).

5. Current regulator circuit according to any of the preceding claims, characterized in that the strobe signal (ts) of the blocking circuit (9) blocking the bridge circuit (drive stage 1) is interrupted when the theoretical value code changes its polarity again before the actual current becomes equal to the zero value.

6. Current regulator circuit according to any of the preceding claims, characterized in that the timer (3) controls the control unit (7) with the positive edges of the timing pulses and controls the application of the actual and theoretical value codes to the comparator (4) with the inverted negative edges of the timing pulses, or vice versa.

**Revendications**

Montage numérique pour la régulation du courant destiné à un dispositif utilisateur de courant continu (M) disposé dans un montage en pont à interrupteurs de puissance électroniques ($Q_1$— $Q_4$), travaillant selon un fonctionnement à plusieurs quadrants, dont la direction du courant est inversable, comprenant un mécanisme de commutation comparateur numérique (4) qui compare un code de valeur réelle binaire correspondant au courant du dispositif utilisateur à un code de valeur de consigne binaire et paut, lorsqu'il y a dépassement ou passage au-dessous de la valeur de consigne du courant, ainsi que lorsqu'il y a concordance entre la valeur réelle et la valeur de consigne, fournir chaque fois des signaux binaires correspondants à une unité de commande (7) des interrupteurs de puissance ($Q_1$— $Q_4$),

comprenant un circuit (9) pour déterminer le signe du code de valeur de consigne correspondant à la direction du déstirée courant, et un générateur de rythme (3) qui commande aussi bien le mécanisme de commutation comparateur (4) que l'unité de commande (7) et de ce fait les temps de mise en circuit et hors circuit des interrupteurs de puissance,

l'unité de commande (7) maintenant à l'état conducteur, pour chaque direction du courant du dispositif utilisateur, l'un des interrupteurs de puissance de la branche du pont correspondant à la direction du courant concernée et mettant en circuit ou hors circuit un second interrupteur de puissance associé respectivement pendant des temps (temps discrets) définis par un signal de rythme jusqu'à ce que soit atteinte la valeur de consigne du courant, alors que les interrupteurs de puissance de l'autre branche du pont restent bloqués jusqu'à ce qu'il y ait inversion de polarité des code de valeur de consigne,

caractérisé en ce qu'il est prévu un circuit de blocage (9) qui produit, quand il y a changement de polarité de la valeur du code de valeur de consigne, un signal d'impulsion (ts) au moyen duquel le code de valeur de consigne du mécanisme de commutation comparateur (4) est amené artificiellement à la valeur de consigne zéro, ou bien des signaux de blocage sont produits dans l'unité de commande (7) pour les interrupteurs de puissance ($Q_1$— $Q_4$),

et en ce qu'il est prévu un circuit de déblocagé (11) commandé en fonction du code de valeur réelle et produisant un signal (so) pour appliquer à nouveau le code de valeur de consigne, qui est appliqué dans le temps concerné au montage de régulation du courant, au mécanisme de commutation comparateur (4) ou pour débloquer les interrupteurs de puissance ($Q_1$— $Q_4$), lorsque le courant du dispositif utilisateur atteint la valeur réelle correspondant à la valeur zéro du code de valeur de consigne.

2. Montage pour la régulation du courant selon la revendication 1, caractérisé en ce qu'il est prévu un circuit qui met fin à la production de la valeur zéro artificielle et applique à nouveau le code de valeur de consigne véritable au mécanisme de commutation comparateur (4) quand le code de valeur de consigne modifie à nouveau la polarité avant d'atteindre le code de valeur réelle correspondant à la valeur zéro.

3. Montage pour la régulation du courant selon la revendication 1 ou 2, caractérisé en ce que le circuit de blocage (9) déterminant le changement de polarité répond à chaque changement de la valeur binaire d'un bit déterminé (BPS) du code de valeur de consigne.

4. Montage pour la régulation du courant selon la revendication 2 ou 3, caractérisé en ce que le code de valeur de consigne est appliqué à un décodeur (10) qui fournit, quand la valeur de consigne est zéro, un signal qui est lié logiquement, avec le signal de sortie ($I_{REEL} = I_{CONS}$) correspondant à la concordance entre la valeur réelle et la valeur de consigne du mécanisme de commutation comparateur (4), au signal de déblocage (so) destiné au circuit de blocage (9).

5. Montage pour la régulation du courant selon l'une des revendications précédentes, caractérisé en ce que le signal d'impulsion (ts) du circuit de blocage (9) qui bloque le montage en pont (étage terminal 1) est interrompu, quand le code de valeur de consigne change à nouveau de signe, avant que le courant réel ait atteint la valeur zéro.

6. Montage pour la régulation du courant selon l'une des revendications précédentes, caractérisé en ce que le générateur de rythme (3) commande l'unité de commande (7) par les flancs positifs des impulsions de rythme et le transfert du code de valeur de consigne et du code de valeur réelle par le mécanisme de commutation comparateur (4) par les flancs négatifs inversés des impulsions de rythme, ou inversement.

7

0 082 362